# EUROPÄISCHE PATENTSCHRIFT

(11) **EP 2 956 342 B1**
(45) Veröffentlichungstag und Bekanntmachung des Hinweises auf die Patenterteilung: **10.07.2019**
(21) Anmeldenummer: 14704121.4
(22) Anmeldetag: 11.02.2014
(51) Int. Cl.: B60T 17/00, B01D 45/16

(54) **DRUCKLUFTEINRICHTUNG EINES FAHRZEUGS MIT FLIEHKRAFTABSCHEIDER**
VEHICLE COMPRESSED AIR DEVICE WITH CENTRIFUGAL SEPARATOR
APPAREIL D'AIR COMPRIME D'UN VEHICULE AVEC SEPARATEUR CENTRIFUGALE

(30) Priorität: 14.02.2013 DE 102013101499
(43) Veröffentlichungstag der Anmeldung: 23.12.2015
(73) Patentinhaber: KNORR-BREMSE Systeme für Nutzfahrzeuge GmbH, 80809 München (DE)
(72) Erfinder: HEIDL, Karlheinz, 82256 Fürstenfeldbruck (DE); HÖHNE, Mark, 83527 Haag i. OB (DE)
(86) Internationale Anmeldenummer: PCT/EP2014/052596
(87) Internationale Veröffentlichungsnummer: WO 2014/124918

(56) Entgegenhaltungen:
- EP-A1- 0 925 819
- WO-A1-81/01110
- DE-A1- 10 121 483
- US-A- 1 637 257

## Beschreibung

Die Erfindung betrifft eine Drucklufteinrichtung eines Fahrzeugs, wobei Mittel zum Abscheiden von Partikeln aus in der Drucklufteinrichtung geführter Druckluft vorgesehen sind, gemäß dem Oberbegriff von Anspruch 1.

Eine solche Drucklufteinrichtung eines Nutzfahrzeugs oder einer Zugfahrzeug-Anhängerkombination umfasst druckluftbetriebene Einrichtungen wie beispielsweise eine Druckluftbremseinrichtung und/oder eine Luftfedereinrichtung. Beim Anhängerfahrzeug wird die anhängerfahrzeugseitige Drucklufteinrichtung von einer Druckluft gespeist, welche über eine zwischen einem zugfahrzeugseitigen Kupplungskopf und einem anhängerfahrzeugseitigen Kupplungskopf geführte flexible Druckluftleitung vom Zugfahrzeug dem Anhängerfahrzeug zugeführt wird. Weiterhin kann eine solche Drucklufteinrichtung auch einen oder mehrere Druckluftbehälter sowie Ventileinrichtungen zum Steuern der Druckluft in Bezug zu Druckluftbremsen und/oder Luftfederbälgen beinhalten.

Meist wird die Druckluft für solche druckluftbetriebenen Einrichtungen von einem zugfahrzeugseitigen Kolbenkompressor erzeugt, bei dessen Betrieb nicht gänzlich vermieden werden kann, dass Partikel aus Ölkohle und Metall in die komprimierte Druckluft gelangen. Ebenso ist es möglich, dass aus Druckluft führenden Rohrleitungen und Druckluftbehältern Partikel in die Druckluft gelangen, welche bei deren Fertigung entstanden sind. Es sind auch Fälle bekannt geworden, bei denen in den nicht mit dem korrespondierenden Kupplungskopf des Zugfahrzeugs verbundenen Kupplungskopf des Anhängerfahrzeugs Sandpartikel gelangt sind. Solche Partikel können jedoch Geräte der Drucklufteinrichtung des Nutzfahrzeugs bzw. der Zugfahrzeug-Anhängerkombination schädigen.

Deshalb ist ein aus DE 10 2009 036 619 A1 bekannter anhängerfahrzeugseitiger Kupplungskopf mit einer Filtereinrichtung zur Filterung der vom Zugfahrzeug zugeführten bzw. der in das Druckluftleitungssystem des Anhängerfahrzeugs von außen gelangenden Luft versehen, wobei die Filtereinrichtung einen in den Kupplungskopf integrierten Filtereinsatz aufweist. Dabei wird bei einer ein vorgegebenes Maß von Verunreinigung des Filtereinsatzes eine Bypassverbindung zwischen zwei Anschlüssen hergestellt, denen der Filtereinsatz zwischen geordnet ist, zur Umgehung des Filtereinsatzes durch die Druckluft. Damit ist aber zum einen ein gewisser Wartungsaufwand zum Reinigen oder Wechseln des Filtereinsatzes notwenig. Zum andern strömt die weiterhin mit Partikeln verunreinigte Druckluft unter Umgehung des Filtereinsatzes über die Bypassverbindung, wenn der Filtereinsatz aufgrund mangelnder Wartung zugesetzt ist.

Eine gattungsgemäße Drucklufteinrichtung in Form einer Druckluftbremse für Schienenfahrzeuge ist aus US 1 637 257 A bekannt. Dort wird ein verunreinigter Luftstrom in ein Schmutzsammelgehäuse geleitet, in welchem er durch Leitmittel in eine in Bezug zu einer Mittelachse der Luftströmung parallelen Ebenen wirkende Wirbelströmung gebracht wird, wobei die schwereren Partikel schwerkraftbedingt nach unten geleitet werden. Aus der relativ starken Umlenkung der Luftströmung in Ebenen parallel zur Anströmrichtung resultiert ein relativ hoher Druckverlust in der Luftströmung. Zum andern ist der Aufbau des Schmutzsammelgehäuses relativ komplex und daher teuer.

### Aufgabe der Erfindung

Davon ausgehend besteht die Aufgabe der Erfindung darin, eine Drucklufteinrichtung der eingangs erwähnten Art derart weiter zu entwickeln, dass sie bei geringen Strömungsverlusten und mit geringem Aufwand ein zuverlässiges Abscheiden von Partikeln aus der Druckluft gewährleistet.

Diese Aufgabe wird durch die Merkmale gemäß Anspruch 1 gelöst.

### Offenbarung der Erfindung

Die Erfindung basiert darauf, dass die Mittel zum Abscheiden von Partikeln aus der Druckluft wenigstens einen Fliehkraftabscheider mit Druckluftführungsmitteln beinhalten, welche die Druckluft in eine schraubenförmige Strömung bringen, um Partikel aus der Druckluft fliehkraftbedingt abzuscheiden.

Dabei ist vorgesehen, dass der Fliehkraftabscheider in einer ohnehin von der Drucklufteinrichtung bereits umfassten Druckluftleitung angeordnet ist, ohne dass für den Fliehkraftabscheider etwa insgesamt eine zusätzliche Druckluftleitung oder etwa ein zusätzlicher Abschnitt der bereits vorhandenen Druckluftleitung in der Drucklufteinrichtung vorgesehen werden müsste. Dies resultiert in einer kostengünstigen Ausführung der Erfindung.

Nicht zuletzt umfasst der Fliehkraftabscheider wenigstens einen in Bezug zur Anströmungsrichtung der Druckluft koaxialen und spiralförmigen Druckluftführungskörper, welcher innerhalb der Druckluftleitung angeordnet ist.

Mit anderen Worten wird die beispielsweise durch eine Druckluftleitung strömende und unter einem Druckgefälle stehende Druckluft zusammen mit den Verunreinigungen wie Partikeln mittels der Druckluftführungsmittel in eine schraubenförmige Strömung gebracht, wobei die relativ schweren Verunreinigungspartikel durch Zentrifugalkraft innerhalb der Druckluftleitung nach radial außen gedrängt und dort dann beispielsweise durch eine in einer Mantelwand der Druckluftleitung ausgebildete Abführöffnung vorzugsweise in einen Sammelbehälter abgeschieden werden. Diese Vorgehensweise ist analog zu einem Zyklon.

Dadurch verringert sich zum einen der Wartungsaufwand weil kein Filtereinsatz mehr gereinigt bzw. gewechselt werden muss.

Durch die in den Unteransprüchen aufgeführten Maßnahmen sind vorteilhafte Weiterbildungen und Verbesserungen der in Anspruch 1 angegebenen Erfindung möglich.

Gemäß einer bevorzugten Ausführungsform wird der Druckluftführungskörper durch wenigstens einen spiralfömigen Streifen gebildet, dessen radial äußerer Rand gegenüber einer radial inneren Umfangsfläche der Druckluftleitung dichtet. Dann wird der in der Druckluftleitung angeordnete Druckluftführungskörper beispielsweise von einer im wesentlichen laminaren Strömung in der Druckluftleitung angeströmt, wobei diese Strömung nach Auftreffen auf das in Strömungsrichtung gesehen vordere Ende des Streifens von diesem so umgelenkt wird, dass sich eine schraubenförmige Strömung zumindest entlang der Längserstreckung des Streifens in Strömungsrichtung einstellt. Durch den radialen Anteil dieser dann schraubenförmigen Strömung werden schwerere Partikel nach radial außen gedrängt und können dort abgeschieden werden.

Dieser spiralfömige Streifen wird bevorzugt durch schraubenförmige Biegung eines anfangs ebenen Streifens hergestellt. Diese Art der Herstellung ist äußerst kostengünstig.

Anstatt eines Streifens kann jede geometrische Struktur als Druckluftführungskörper verwendet werden, welche die Druckluftströmung innerhalb der Druckluftleitung in eine schraubenförmige Strömung überführen kann, beispielsweise auch eine zylindrische Stange mit einer schraubenförmig gewundenen Leitfläche an ihrer radial äußeren Umfangsfläche, wobei sich diese Leitfläche dann bevorzugt bis an die radial innere Umfangsfläche der Mantelwand der Druckluftleitung erstreckt und diese dichtend kontaktiert.

Gemäß einer Weiterbildung ist an der Druckluftleitung wenigstens eine Abführöffnung für aus der Druckluft abgeschiedene Partikel vorgesehen. Diese Abführöffnung ist bevorzugt mit einem Partikelsammelbehälter verbunden, so dass die durch die Fliehkräfte gegen die radial innere Umfangsfläche der Mantelwand gedrängten Partikel durch die Abführöffnung hindurch in den Sammelbehälter gelangen können.

Gemäß einer vorteilhaften Ausführungsform ist die wenigstens eine Abführöffnung in Strömungsrichtung der Druckluft gesehen am Ende des Druckluftführungskörpers bzw. des Streifens angeordnet. Dann ist sichergestellt, dass die sich die durch Lenkung des Streifens ausbildende Strömung ausreichend schraubenförmig ausgebildet ist, damit die radialen Fliehkräfte groß sind, um die Partikel durch die Abführöffnung hindurch abzuscheiden.

Gemäß einer Weiterbildung ist die wenigstens eine Abführöffnung an einem offenen Ende der Druckluftleitung angeordnet, in welches eine kegelförmige Düse eingeführt ist, wobei zwischen der radial inneren Umfangsfläche der Druckluftleitung und der radial äußeren Umfangsfläche der kegelförmigen Düse ein Spalt als Abführöffnung ausgebildet wird. Dies bedingt eine sehr einfache Fertigung der Abführöffnung.

Besonders bevorzugt ist die Drucklufteinrichtung einem Anhängerfahrzeug einer Nutzfahrzeugkombinatiön aus Zugfahrzeug und Anhängerfahrzeug zugeordnet. Denn bei vom Zugfahrzeug abgekuppeltem Anhänger besteht Gefahr, dass Verunreinigungen durch die beiden anhängerfahrzeugseitigen Kupplungsköpfe (z.B. Vorrat, Bremse) in die Drucklufteinrichtung des Anhängerfahrzeugs gelangen.

Besonders bevorzugt ist dann der Fliehkraftabscheider in einer Druckluftleitung in Strömungsrichtung der Druckluft gesehen hinter einem anhängerseitigen Kupplungskopf und vor einem Druckluftbehälter des Anhängerfahrzeugs angeordnet. Damit kann vermieden werden, dass Partikel in den wenigstens einen Druckluftbehälter gelangen.

Nicht zuletzt ist die Drucklufteinrichtung eine Drucklufteinrichtung eines Nutzfahrzeugs oder einer Nutzfahrzeugkombination aus Zugfahrzeug und Anhängerfahrzeug wie eine Druckluftbremseinrichtung oder eine Luftfederungseinrichtung.

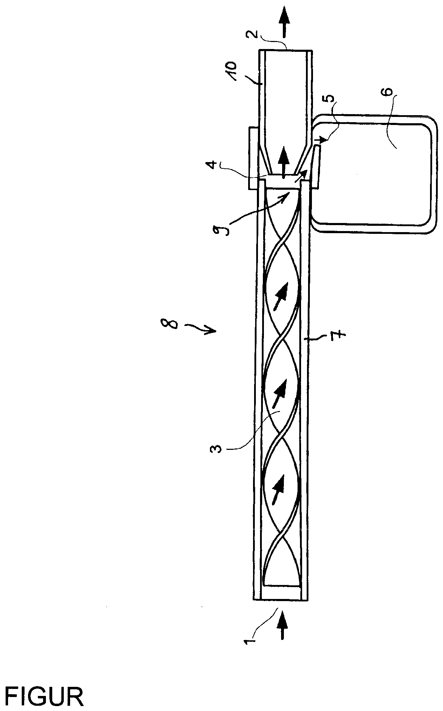

Weitere die Erfindung verbessernde Maßnahmen werden nachstehend in der Beschreibung von Ausführungsbeispielen der Erfindung und in der Zeichnung näher dargestellt.

### Zeichnung

Nachstehend ist ein Ausführungsbeispiel der Erfindung in der Zeichnung dargestellt und in der nachfolgenden Beschreibung näher erläutert. In der Zeichnung zeigt die einzige Figur eine Querschnittsdarstellung eines in einer Druckluftleitung einer Drucklufteinrichtung angeordneten Fliehkraftluftabscheiders gemäß einer bevorzugten Ausführungsform der Erfindung.

### Beschreibung des Ausführungsbeispiels

In der Figur ist eine Druckluftleitung 7 einer Drucklufteinrichtung eines Nutzfahrzeugs im Querschnitt gezeigt. Bei der Drucklufteinrichtung handelt es sich beispielsweise um eine pneumatische Druckluftbremseinrichtung eines Anhängerfahrzeugs einer Zugfahrzeug-Anhängerkombination.

Dem Anhängerfahrzeug wird dabei Druckluft über eine Leitungsverbindung zwischen wenigstens einem zugfahrzeugseitigen Kupplungskopf und wenigstens einem anhängerfahrzeugseitigen Kupplungskopf in die Druckluftbremseinrichtung zugeführt. Die in der Figur dargestellte Druckluftleitung 7 verläuft bevorzugt zwischen einem anhängerfahrzeugseitigen Kupplungskopf und wenigstens einem Druckluftvorrat für die Druckluftbremseinrichtung.

Vorliegend ist in der Druckluftleitung 7 ein Fliehkraftabscheider 8 mit Druckluftführungsmitteln 3 angeordnet, welche die Druckluft in eine in der Figur durch Pfeile symbolisierte schraubenförmige Strömung bringen, um Partikel aus der Druckluft 1 fliehkraftbedingt abzuscheiden. Besonders bevorzugt ist der Fliehkraftabscheider 8 in einer ohnehin von der Drucklufteinrichtung bereits umfassten Druckluftleitung 7 angeordnet, ohne dass für den Fliehkraftabscheider 8 etwa insgesamt eine zusätzliche Druckluftleitung oder etwa ein zusätzlicher Abschnitt der bereits vorhandenen Druckluftleitung 7 in der Drucklufteinrichtung vorgesehen werden müsste. Alternativ könnte auch eine zusätzlich Druckluftleitung bzw. ein zusätzlicher Abschnitt in einer ohnehin vorhandenen Druckluftleitung für den Fliehkraftabscheider 8 vorgesehen sein.

Besonders bevorzugt umfasst der Fliehkraftabscheider 8 wenigstens einen in Bezug zu der in der Figur mit der Bezugszahl 1 gekennzeichneten Anströmungsrichtung der Druckluft koaxialen und spiralförmigen Druckluftführungskörper 3, welcher innerhalb der Druckluftleitung 7 angeordnet ist. Dann wird durch Anströmung des Druckluftführungskörpers 3 die zunächst gerade Strömung schraubenförmig umgelenkt, wobei die gedachte Mittelachse dieser schraubenförmigen Strömung bevorzugt koaxial mit der Mitteelachse der Druckluftleitung 7 ist.

Besonders bevorzugt wird der Druckluftführungskörper durch wenigstens einen spiralförmigen Streifen 3 gebildet, dessen radial äußerer Rand gegenüber einer radial inneren Umfangsfläche der Druckluftleitung 7 dichtet. Dieser spiralfömige Streifen 3 wird bevorzugt durch schraubenförmige Biegung eines anfangs ebenen Streifens 3 hergestellt.

In einer Mantelwand der Druckluftleitung 7 ist dann wenigstens eine Abführöffnung 9 für aus der Druckluft abgeschiedene Partikel 5 vorgesehen. Diese Abführöffnung 9 ist bevorzugt mit einem Partikelsammelbehälter 6 verbunden, so dass die durch die Fliehkräfte gegen die radial innere Umfangsfläche der Mantelwand gedrängten Partikel 5 durch die Abführöffnung 9 hindurch in den Partikelsammelbehälter 6 gelangen können.

Gemäß einer vorteilhaften Ausführungsform ist die wenigstens eine Abführöffnung 9 in Strömungsrichtung der Druckluft gesehen bevorzugt am Ende des Streifens 3 und am offenen Ende der Druckluftleitung 7 angeordnet. In das offene Ende der Druckluftleitung 7 ist eine kegelförmige Düse 4 eingeführt, wobei zwischen der radial inneren Umfangsfläche der Druckluftleitung 7 und der radial äußeren Umfangsfläche der kegelförmigen Düse 4 ein Spalt als Abführöffnung 9 ausgebildet wird, über dann die durch die Fliehkräfte an die radial innere Umfangsfläche der Druckluftleitung gedrängten Partikel 5 in den Partikelsammelbehälter 6 gelangen können, teils schwerkraftbedingt und teils durch die Fliehkräfte. Eine Verbindung zwischen dem offenen Ende der Druckluftleitung 7 und der kegelförmigen Düse 4 kann beispielsweise durch eine Überwurfhülse 10 hergestellt werden. Die von Partikeln gereinigte Druckluft, welche in der Figur mit der Bezugszahl 2 gekennzeichnet ist, wird dann in den Druckluftbehälter des Anhängerfahrzeugs weiter geleitet.

Der Partikelsammelbehälter 6 ist bevorzugt aus einem transparenten Material gefertigt, so dass der Füllstand von außen sichtbar ist und der Partikelsammelbehälter 6 bedarfsweise geleert werden kann.

### Bezugszahlenliste

- 1: Druckluft mit Partikel
- 2: Druckluft ohne Partikel
- 3: Streifen
- 4: Düse
- 5: Partikel
- 6: Partikelsammelbehälter
- 7: Druckluftleitung
- 8: Fliehkraftabscheider
- 9: Abführöffnung
- 10: Überwurfhülse

## Patentansprüche

1. Drucklufteinrichtung eines Fahrzeugs, wobei Mittel zum Abscheiden von Partikeln (5) aus in der Drucklufteinrichtung geführter Druckluft vorgesehen sind, wobei die Mittel zum Abscheiden von Partikeln (5) aus der Druckluft (1) wenigstens einen Fliehkraftabscheider (8) mit Druckluftführungsmitteln (3) beinhalten, welche die Druckluft (1) in eine schraubenförmige Strömung bringen, um Partikel (5) aus der Druckluft (1) fliehkraftbedingt abzuscheiden, wobei der Fliehkraftabscheider (8) in einer ohnehin von der Drucklufteinrichtung bereits umfassten Druckluftleitung (7) angeordnet ist, **dadurch gekennzeichnet, dass** der Fliehkraftabscheider (8) wenigstens einen in Bezug zur Anströmungsrichtung der Druckluft (1) koaxialen und spiralförmigen Druckluftführungskörper (3) umfasst, welcher innerhalb der Druckluftleitung (7) angeordnet ist.

2. Drucklufteinrichtung nach Anspruch 1, **dadurch gekennzeichnet, dass** der Druckluftführungskörper (3) durch wenigstens einen spiralförmigen Streifen gebildet wird, dessen radial äußerer Rand gegenüber einer radial inneren Umfangsfläche der Druckluftleitung (7) dichtet.

3. Drucklufteinrichtung nach einem der vorhergehenden Ansprüche, **dadurch gekennzeichnet, dass** an der Druckluftleitung (7) wenigstens eine Abführöffnung (9) für aus der Druckluft abgeschiedene Partikel (5) vorgesehen ist.

4. Drucklufteinrichtung nach Anspruch 3, **dadurch gekennzeichnet, dass** die Abführöffnung (9) mit einem Partikelsammelbehälter (6) verbunden ist.

5. Drucklufteinrichtung nach einem der vorhergehenden Ansprüche, **dadurch gekennzeichnet, dass** die wenigstens eine Abführöffnung (9) in Strömungsrichtung der Druckluft gesehen am Ende des Druckluftführungskörpers (3) angeordnet ist.

6. Drucklufteinrichtung nach einem der vorhergehenden Ansprüche, **dadurch gekennzeichnet, dass** die wenigstens eine Abführöffnung (9) an einem offenen Ende der Druckluftleitung (7) angeordnet ist, in welches eine kegelförmige Düse (4) eingeführt ist, wobei zwischen der radial inneren Umfangsfläche der Druckluftleitung (7) und der radial äußeren Umfangsfläche der kegelförmigen Düse (4) ein Spalt als Abführöffnung ausgebildet wird.

7. Drucklufteinrichtung nach einem der vorhergehenden Ansprüche, **dadurch gekennzeichnet, dass** sie die Drucklufteinrichtung eines Nutzfahrzeugs oder einer Nutzfahrzeugkombination aus Zugfahrzeug und Anhängerfahrzeug wie eine Druckluftbremseinrichtung oder eine Luftfederungseinrichtung ist.

## Claims

1. Compressed-air device of a vehicle, means being provided for separating particles (5) from compressed air which is conducted in the compressed-air device, the means for separating particles (5) from the compressed air (1) comprising at least one centrifugal separator (8) with compressed-air guide means (3) which direct the compressed air (1) into a helical flow, in order to separate particles (5) from the compressed air (1) as a result of centrifugal force, the centrifugal separator (8) being arranged in a compressed-air line (7) which is already included by the compressed-air device in any case, **characterized in that** the centrifugal separator (8) comprises at least one spiral compressed-air guide body (3) which is coaxial in relation to the incident flow direction of the compressed air (1) and is arranged within the compressed-air line (7).

2. Compressed-air device according to Claim 1, **characterized in that** the compressed-air guide body (3) is formed by at least one spiral strip, the radially outer edge of which seals with respect to a radially inner circumferential face of the compressed-air line (7) .

3. Compressed-air line according to either of the preceding claims, **characterized in that** at least one discharge opening (9) for particles (5) which are separated from the compressed air is provided on the compressed-air line (7).

4. Compressed-air device according to Claim 3, **characterized in that** the discharge opening (9) is connected to a particle collecting vessel (6).

5. Compressed-air device according to one of the preceding claims, **characterized in that** the at least one discharge opening (9) is arranged at the end of the compressed-air guide body (3) as viewed in the flow direction of the compressed air.

6. Compressed-air device according to one of the preceding claims, **characterized in that** the at least one discharge opening (9) is arranged at an open end of the compressed-air line (7), into which open end a conical nozzle (4) is introduced, a gap being configured as a discharge opening between the radially inner circumferential face of the compressed-air line (7) and the radially outer circumferential face of the conical nozzle (4).

7. Compressed-air device according to one of the preceding claims, **characterized in that** it is the compressed-air device of a commercial vehicle or a coupled commercial vehicle combination comprising a traction vehicle and a trailer vehicle, such as a compressed-air brake device or a pneumatic suspension device.

## Revendications

1. Dispositif d'air comprimé d'un véhicule, dans lequel il est prévu des moyens pour séparer des particules (5) de l'air comprimé passant dans le dispositif d'air comprimé, les moyens de séparation des particules (5) de l'air (1) comprimé comportant au moins un séparateur (8) centrifuge ayant des moyens (3) de conduite de l'air comprimé, qui mettent l'air (1) comprimé en un écoulement hélicoïdal, afin de séparer, par la force centrifuge, des particules (5) de l'air (1) comprimé, le séparateur (8) centrifuge étant disposé dans un conduit (7) pour de l'air comprimé déjà englobé de toute façon par le dispositif d'air comprimé, **caractérisé en ce que** le séparateur (8) centrifuge comprend au moins une pièce (3) de conduite de l'air comprimé coaxiale à la direction d'afflux de l'air (1) comprimé et en forme de spirale, qui est disposée à l'intérieur du conduit (7) pour de l'air comprimé.

2. Dispositif d'air comprimé suivant la revendication 1, **caractérisé en ce que** la pièce (3) de conduite de l'air comprimé est formée d'au moins une bande en forme de spirale, dont le bord extérieur radialement vient, de manière étanche, contre une surface périphérique intérieure radialement du conduit (7) pour de l'air comprimé.

3. Dispositif d'air comprimé suivant l'une des revendications précédentes, **caractérisé en ce que** sur le conduit (7) pour de l'air comprimé est prévue au moins une ouverture (9) d'évacuation de particules (5) séparées de l'air comprimé.

4. Dispositif d'air comprimé suivant la revendication 3, **caractérisé en ce que** l'ouverture (9) d'évacuation communique avec un récipient (6) de collecte de particules.

5. Dispositif d'air comprimé suivant l'une des revendications précédentes, **caractérisé en ce que** la au moins une ouverture (9) d'évacuation est disposée, considéré dans le sens de passage de l'air comprimé, à l'extrémité de la pièce (3) de conduite de l'air comprimé.

6. Dispositif d'air comprimé suivant l'une des revendications précédentes, **caractérisé en ce que** la au moins une ouverture (9) d'évacuation est disposée à une extrémité ouverte du conduit (7) pour de l'air comprimé, extrémité dans laquelle est insérée une buse (4) de forme conique, un intervalle étant constitué comme ouverture d'évacuation entre la surface périphérique intérieure radialement du conduit (7) pour de l'air comprimé et la surface périphérique extérieure radialement de la buse (4) de forme conique.

7. Dispositif d'air comprimé suivant l'une des revendications précédentes, **caractérisé en ce qu'**il est le dispositif d'air comprimé d'un véhicule utilitaire ou d'une combinaison de véhicule utilitaire, composée d'un véhicule tracteur et d'un véhicule remorque, comme un dispositif de freinage à air comprimé ou un dispositif de suspension pneumatique.
